# EUROPÄISCHE PATENTSCHRIFT

(11) **EP 4 112 240 B1**
(45) Veröffentlichungstag und Bekanntmachung des Hinweises auf die Patenterteilung: **29.01.2025**
(21) Anmeldenummer: 22180194.7
(22) Anmeldetag: 21.06.2022
(51) Int. Cl.: B25J 9/16

(54) **AUTONOMES MANIPULIEREN EINER BIEGESCHLAFFEN PRIMÄRVERPACKUNG IN EINER FORMSTABILEN SEKUNDÄRVERPACKUNG MITTELS ROBOTER**
AUTONOMOUS MANIPULATION OF A FLEXIBLE PRIMARY PACKAGE IN A DIMENSIONALLY STABLE SECONDARY PACKAGE BY MEANS OF ROBOTS
MANIPULATION AUTONOME D'UN EMBALLAGE PRIMAIRE SOUPLE EN FLEXION DANS UN EMBALLAGE SECONDAIRE DE FORME STABLE AU MOYEN D'UN ROBOT

(30) Priorität: 28.06.2021 EP 21182082
(43) Veröffentlichungstag der Anmeldung: 04.01.2023
(73) Patentinhaber: Bayer AG, 51373 Leverkusen (DE)
(72) Erfinder: Coulon, Carl-Helmut, 53115 Bonn (DE); Thomas, Carsten, 44141 Dortmund (DE); Schweiger, Armin, 51469 Bergisch Gladbach (DE); Ordoñez Apræz, Daniel Felipe, 16149 Genova (IT)
(74) Vertreter: BIP Patents

(56) Entgegenhaltungen:
- EP-A1- 2 592 007
- EP-A1- 2 745 999
- WO-A1-2019/045779
- WO-A1-2019/169420
- CN-A- 111 559 551
- JP-A- 2007 204 048
- JP-A- H0 385 238

## Beschreibung

Die Anmeldung betrifft eine Lösung zum automatisierten Manipulieren einer biegeschlaffen Primärverpackung in einer formstabilen Sekundärverpackung mit Hilfe eines zweiarmigen Roboters. Insbesondere soll die Lösung vor Kontamination schützen und die Sekundärverpackung wiederverschließbar sein.

In der chemisch-pharmazeutischen Industrie stellen Papptrommeln (formstabile Sekundärverpackung, auch Fiebertrommeln genannt) mit PE-Inliner (biegeschlaffe Primärverpackung, vgl. Kunststofftüte) für pulver- und Granulat förmige Feststoffe ein Standardgebinde für den Transport und die Lagerung von Material dar. Das Material befindet sich hierbei im verschlossenem PE-Inliner, der wiederum durch eine Papptrommel geometrisch stabilisiert und geschützt ist. Zum Verschluss der Trommel wird üblicherweise ein metallischer Spannring verwendet. Üblich sind zylinderförmige Papptrommel mit einem Volumen von 3 bis 120 L.

Der Begriff "Manipulieren" im Sinne der Anmeldung bezeichnet das Verändern der geometrischen Form der biegeschlaffen Primärverpackung in der Sekundärpackung, z. B. das Öffnen der biegeschlaffen Primärverpackung, um den Inhalt zu beproben, zu entnehmen oder zu beladen, oder das Verschließen, durch Verdrehen eines oberen Abschnitts der biegeschlaffen Primärverpackung.

Für das Öffnen einer biegeschlaffen Primärverpackung ist der Eingangszustand für das Gebinde typischerweise ein verschlossener und verdrehter oberer Abschnitt des PE-Inliner (biegeschlaffe Primärverpackung) in einer geöffneten Papptrommel (formstabile Sekundärverpackung). Der Zielzustand stellt einen geöffneten PE-Inliner dar, so dass Material auf eine beliebige Art entnommen werden kann. Der PE-Inliner wird typischerweise beim Verpackungsprozess beansprucht, so dass oft-manipulierte bzw. zu-oft manipulierte PE-Inliner ein verändertes auch unterschiedliches physisches Verhalten aufweisen. Die Herausforderung dabei stellt das automatische Manipulieren, insbesondere das Öffnen des biegeschlaffen PE-Inliners in der geöffneten Papptrommel dar, ein Prozess, der bislang manuell durchgeführt wird. Motiviert durch den Health-Safety-Environment (HSE)-basierten Grund, Mensch und (Wirk-) Stoffe zu trennen, ist eine Automatisierung des Prozesses zwingend erforderlich.

Aufgrund der hohen Anzahl genutzter Papptrommeln und biegeschlaffen PE-Liner als etablierte Gebinde in der Industrie bestand Bedarf nach einer Lösung zum Manipulieren insbesondere zum autonomen Öffnen der PE-Inliner in diesem Standardgebinde durch einen Roboter. Darüber hinaus sollte die Lösung ein autonomes Entladen- bzw. Beladen sowie Schließen der biegeschlaffen Primärverpackung in der geöffneten formstabilen Sekundärverpackung durch einen Roboter ermöglichen.

EP 2 592 007 A1 beschreibt eine Auspackvorrichtung, die ein Paket auspackt und den Inhalt entnimmt. Die Verpackung umfasst eine Primärverpackung, die durch Verpacken des Inhalts mit einem Primärverpackungsmaterial gebildet wird, und eine Sekundärverpackung, die durch Verpacken der Primärverpackung mit einem Sekundärverpackungsmaterial gebildet wird. Die Auspackvorrichtung umfasst einen Roboter und eine Steuereinheit zur Steuerung des Roboters, wobei die Steuereinheit so konfiguriert sein kann, dass sie den Roboter so steuert, dass der Roboter vor der Entnahme des Inhalts einen vorbereitenden Greifvorgang durchführt, bei dem er einen bestimmten Teil des Primärverpackungsmaterials der Primärverpackung greift und die Primärverpackung um einen bestimmten Wert anhebt.

EP 2 745 999 A1 beschreibt ein Robotersystem, das in der Lage ist, ein Objekt aus einem Behälter zu entnehmen, wobei der Roboter einen Kraftsensor, eine Hand und eine Kameraeinheitumfasst. Der Kraftsensor kann detektieren, dass der Greifer das Objekt oder den Behälter berührt.

WO 2019/169420 A1 beschreibt Robotersysteme, die zum robusten Greifen und/oder Zielen einer Vielzahl von Objekten konfiguriert sind, unter Verwendung von Greifern oder Saugnapfgeräten, und insbesondere auf die Verwendung von Bibliotheken von 3D-Objektmodellen, die dies können analysiert und statistisch abgetastet werden, um einem Roboter beizubringen, Objekte zu greifen und/oder anzuvisieren, und zwar robust gegenüber Fehlern in der Erfassung und Steuerung. Das Erkennen des Ergebnisses von Zielversuchen umfasst die Verwendung mindestens eines ausgewählten Elements aus einer Gruppe bestehend aus: einer oder mehreren Kraftmessdosen, einem Lichtsensor, einer Kamera, einem Kraftsensor und einem taktilen Sensor. Ein Kraftsensor kann detektieren, dass der Greifer ein Objekt oder einen Behälter berührt.

Die Aufgabe wird durch ein System und ein Verfahren nach den Ansprüchen bzw. 6 gelöst.

Die davon abhängigen Ansprüche stellen besondere Ausführungsformen der erfindungsgemäßen Lösung dar.

Die Erfindung wird nachfolgend näher beschrieben, ohne zwischen den Erfindungsgegenständen (Verfahren und System) zu unterscheiden. Die nachfolgenden Erläuterungen sollen vielmehr für alle Erfindungsgegenstände in analoger Weise gelten, unabhängig davon, in welchem Kontext (Verfahren oder System) sie erfolgen.

Eine biegeschlaffe Primärverpackung im Sinne dieser Anmeldung ist typischerweise eine Tüte, z. B. eine Kunststofftüte, insbesondere eine Polyethylen-Tüte, auch PE-Inliner genannt. Eine formstabile Sekundärverpackungim Sinne der Anmeldungisttypischerweise einFass oder eine Trommel, insbesondere eine Papptrommel. Die Beispiele sind aber für die Anwendbarkeit der beschriebenen Lösung nicht begrenzend.

In einer besonderen Ausführungsform bezeichnet der Begriff "Manipulieren", im Sinne der Anmeldung, das Verändern der geometrischen Form des PE-Inliners in der geöffneten Sekundärpackung, um den Inhalt z. B. zu Beproben, zur Verwendung von Entnahmen oder zu Beladen.

Erster Gegenstand der Anmeldung ist ein System zum automatisierten Manipulieren einer biegeschlaffen Primärverpackung mit einem verschlossenen und verdrehten oberen Segment in einer geöffneten formstabilen Sekundärverpackung (zusammen auch Gebinde genannt), umfassend folgende Systemmodule
- Ein flexibles kraftgeregeltes Robotermodul zum Automatisierten und autonomen Manipulieren, insbesondere Öffnen, der Primärverpackung . Dieses Robotermodul umfasst einen Roboter zwei Roboterarmen, mit jeweils einem Klemmgreifer an einem Tool Center Point montiert. Die Klemmgreifer werden für die Durchführung der Öffnen-, Entladungs- und Beladungs-, sowie Schließen-Prozesse unter Berücksichtigung der Informationen aus einer Kraft-Momenten-Sensorik der Roboterarme gesteuert. Jeder Tool Center Point weist mindestens ein Kraft-Momenten-Sensor auf, der Messungen von Spannungen, Kraft- und Drehmoment, am Greifer bereitstellen kann;
- Ein Bildaufnahmemodul zur Bildaufnahme, mindestens des oberen Segments der Primärverpackung, welches mindestens zwei Stereokameras zur 3D-Bildaufnahme, mindestens des oberen Segments derPrimärverpackungumfasst, wobei mindestens eine der Stereokameras seitlich zu einer Luftlinie zwischen dem Gebinde in einem Bildaufnahmebereich der Stereokameras und dem Roboter platziert ist.
   In einer Ausführungsform nimmt eine erste Kamera das Gebinde von oben auf, und die zweite Kamera ist seitlich platziert, bevorzugt in einem Rechtwinkel zu einer Luftlinie zwischen dem Gebinde und dem Roboter, besonders bevorzugt in der Vertikalen in einem Winkel von 60 bis 70 Grad. In einem weiteren Beispiel wird eine dritte Kamera verwendet, die gegenüber der zweiten Kamera platziert ist.
   Die Kameras sind zueinander und zum Robotermodul kalibriert (Hand-Eye-Calibration).
   In einer Ausführungsform werden Bilder des oberen Segments der Primärverpackung und des oberen Segments der Sekundärverpackung durch die Stereokameras aufgenommen.
- Ein oder mehrere Prozessoren (zusammenfassend auch Steuerungsmodul genannt) zur Steuerung der Systemmodule konfiguriert für die Durchführung folgender Schritte:
   o Steuerung der Bildaufnahme durch das Bildaufnahmemodul,
   o Empfang der Bilder aus dem Bildaufnahmemodul,
   o Bildbearbeitung und Bereitstellen einer 3D-Punktewolke,
   o Oberflächenrekonstruktion mindestens der Primärverpackung, optional und der Sekundärverpackung aus der 3-dimensionalen-Punktwolke;
   o Berechnen des höchsten Punktes der Primärverpackung aus der 3D-Punktwolke als Greifposition des Klemmgreifers aus der Oberflächenrekonstruktion;
   o Berechnen einer Bewegung bzw. eines Bewegungsablaufs des Klemmgreifers zu und in der Greifposition und
   o Weitergeben der berechneten Bewegung bzw. Bewegungsablauf an das Robotermodul;
   o Empfang der Messungen aus den Kraft-Momenten-Sensoren und Detektion einer Verdreh-Richtung und /oder Spannung der Primärverpackung aufgrund der Messungen;
      wobei wenn die Primärverpackung geöffnet wird, indem der Greifer in einer Bewegung oder eine Drehbewegung unter Berücksichtigung von Messungen aus dem Kraft-Momentan-Sensor (KMS-Sensor) an seinem Tool Center Point, entgegen der Verdreh-Richtung (entdrehend / herausdrehend) nach oben hochgezogen wird, bis eine vordefinierte Obergrenze für die Spannung gemessen durch den KMS-Sensor erreicht wird und/oder vordefinierte Kriterien für das Öffnen der Primärverpackung erreicht werden,
- Schnittstellen zwischen das Robotermodul und den Prozessoren sowie zwischen das Bildaufnahmemodul und den Prozessoren.

Bei der Oberflächenrekonstruktion im Sinne der Anmeldung geht es um das Computing einer oberflächen- und volumenbezogenen 3-dimensionalen digitalen Darstellung der Primärverpackung und der Sekundärverpackung oder Anteile davon, erzeugt mit Hilfe eines Programms zur Verarbeitung n-dimensionaler Punktwolken und dreidimensionaler Geometrie. In einer Ausführungsform wird für eine bessere Bildaufnahme und zuverlässigere Bilderkennung eine zusätzliche flächige Beleuchtung des Gebindes, bevorzugt von oben, verwendet.

In einer Ausführungsform umfasst das System ein Modul zur Platzierung des Gebindes in Reichweite des Roboters, unter der ersten Stereokamera und im Aufnahmebereich der zweiten Stereokamera.

Unter einem Robotermodul ist im Rahmen der Erfindung eine Vorrichtung zu verstehen, die dazu ausgelegt ist, mit der Umgebung physikalisch zu interagieren, um mechanische Arbeit durchzuführen. Jeder Roboterarm (auch Manipulator genannt) des Robotermoduls umfasst am Tool Center Point ein Greifsystem, typischerweise einen Klemmgreifer, wodurch die Primärverpackung gegriffen und manipuliert wird. Grundsätzlich ist es möglich, dass der Roboterarm manuell gesteuert wird. Allerdings ist erfindungsgemäß vorgesehen, dass die Bewegung des Roboterarms durch Eingabe und/oder Programmierung kraftgeregelt gesteuert wird.

In einer Ausführungsform weist der Roboterarm mehrere Bewegungsachsen auf, damit der Klemmgreifer sich die Primärverpackung von oben mit maximalem Freiheitsgrad annähern kann. Die Überwachung der auf die Bewegungsachsen wirkenden Kräfte und / oder Momente ist vorteilhaft, da so unterschieden werden kann, wo Kräfte und / oder Momente an dem Robotermodul angreifen.

Wie bereits aufgeführt ist erfindungsgemäß vorgesehen, dass die Bewegung des Roboterarms kraftgeregelt gesteuert wird.

In einer Ausführungsform umfasst die Kraft-Momenten-Sensorik ein oder mehrere Kraft-Momenten-Sensoren (KMS), die die auf dem Greifer übertragene Verdrehrichtung und Spannung der Primärverpackung aufgrund des auftretenden Drehmomentes in 6 Dimensionen (Freiheitsgrade)- typischerweise 3 translatorische und 3 rotatorische Dimensionen (Fx, Fy, Fz, Mx, My, Mz) - detektieren können, ohne die Erfindungjedoch auf diese Ausführungsform zu beschränken.

Die Bewegung eines Greifers im geschlossenen Zustand (auch geschlossenen Greifer genannt) erfolgt unter Berücksichtigung der Messungen aus einem oder mehreren KMS-Sensoren während der Bewegung des Greifers.

Vor dem Schließen des Greifers wirken keine prozessbedingten Kräfte und Drehmomente auf den Greifer und damit auch nicht auf den fest mit dem Greifer gekoppelten Kraft-Momenten-Sensor. Nach dem Schließen des Greifers und dem Greifen der Primärverpackung kommt es zu einer Kraftkopplung nahe dem Wert 0. Erst durch das Bewegen des geschlossenen Greifers mittels dem Roboterarm entsteht eine Kraft in Längsrichtung der Bewegungsrichtung. Durch das Spannen der verdrehtenPrimärverpackung entsteht ein Drehmoment, da das Material durch die Zugkraft gezwungen ist, sich zu entdrehen. Infolgedessen wirkt auf den Greifer ein entgegengesetztes Drehmoment. Der Prozess sieht vor, statt mit einem gleich ausgerichteten Greifer durch Ziehen und der damit steigenden Kraft an der Primärverpackung das aus der Verdrehung resultierende Drehmoment entstehen zu lassen, den Aufbau des Drehmomentes zu vermeiden. Das auftretende Drehmoment wird durch das Drehen des Greifers um die eigene Längsachse, entgegen der gemessenen Drehmomentrichtung, kontinuierlich minimiert, bevorzugt möglichst nahe dem Wert 0 gehalten. Diese Drehung erfolgt typischerweise durch Bewegung des Roboterarms.

Bevorzugt messen die KMS-Sensoren kontinuierlich, mindestens, während der Greifer geschlossen ist.

Die Stärke des Drehmomentes ist von verschiedenen Parametern abhängig. Die bedeutendsten Parameter sind: Materialeigenschaften der Primärverpackung, Größe der Primärverpackung Verdrehung der Primärverpackung vor der Manipulation, Kraft beim Ziehen der Primärverpackung.

Eine vordefinierte Obergrenze für die Spannung der Primärverpackung ist daher im Sinne der Anmeldung durch maximale Messwerte, gemessen durch den KMS-Sensor, definiert.

Das Gebinde muss in Reichweite der Klemmgreifer und in den Aufnahmebereich der Kameras platziertwerden. In einem Beispiel ist das Robotermodul fixiertund das Gebinde in Reichweite der Klemmgreifer platziert. Bevorzugt ist die Sekundärverpackungin diesem Aufnahmebereich drehbar gelagert. So kann der Roboter besser greifen und das Gebinde kann sich bei Bedarf den Kräften anpassen, z. B. kann durch das reaktive Drehen des Gebindes, das Reißen der Primärverpackung, unterstützend verhindern.

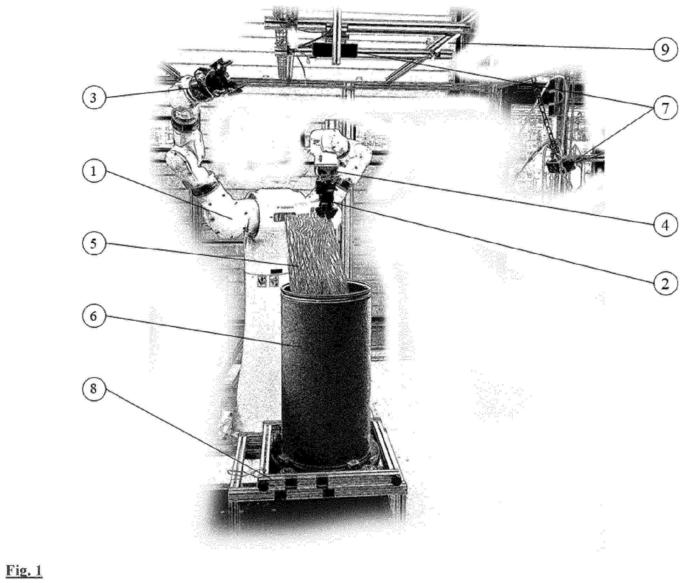

Es ist bevorzugt eine gleichmäßige, flächige Beleuchtung typischerweise von oben bereitzustellen. Dies kann mit einer Beleuchtungsvorrichtung quadratisch über dem Roboter und der Trommel in Form von LED-Lichtleisten, wie z. B. Fig. 1, Ziffer 9 dargestellt, erreicht werden. Vorzugsweise wird eine Anordnung von LEDs verwendet.

Dem Fachmann ist offensichtlich, dass die Auswahl und Geometrie der Beleuchtung beliebig angepasst werden kann, um eine möglichst gleichmäßige Beleuchtung der Gebinde im Aufnahmebereich zu erreichen.

In einer Ausführungsform sind ein oder mehrere Prozessoren zur Steuerung der Systemmodule konfiguriert für die Durchführung der Kalibration der Stereokameras zueinander und zum Roboter (einer sogenannte Hand-Eye-Calibration). Diese Kalibration erfolgt typischerweise einmal bei der Inbetriebnahme des Systems.

Das erfindungsgemäße System zeichnet sich dadurch aus, dass alle eingesetzten Hardware-Komponenten flexibel einsetzbar sind und keine speziell auf die Anwendung angepasste Werkzeuge darstellen.

Weiterer Gegenstand der Anmeldung ist ein Verfahren zum automatisierten Manipulieren einer biegeschlaffen Primärverpackung mit einem verschlossenen und verdrehten oberen Segment in einer geöffneten, formstabilen Sekundärverpackung zusammen Gebinde genannt, durch einen computer-gesteuerten Roboter mit zwei Armen, mit jeweils einem an einem Tool Center Point fixierten Klemmgreifer, überwacht mit einem Kraft-Momenten-Sensor, mit folgenden Schritten
A) Bildaufnahme mindestens des oberen Segments der Primärverpackung mit mindestens zwei Stereokameras zur 3D-Bildaufnahme, wobei mindestens eine der Stereokameras seitlich zu einer Luftlinie zwischen dem Gebinde und dem Roboter platziert ist
B) Bereitstellung einer 3 -dimensionalenPunktewolke mindestens des oberen Segments der Primärverpackung durch Bildanalyse der Bildaufnahme;
C) Ermitteln eines höchsten Punktes der Primärverpackung aus der 3-dimensionalen - Punktewolke, als Greifpunkt für einen der Klemmgreifer mit Hilfe eines Computerprogramms zur Oberflächenrekonstruktion mindestens der Primärverpackung, optional und der Sekundärverpackung aus der 3-dimensionalen-Punktwolke;
D) Berechnung eines kollisionsfreien Annäherungspfads zu dem berechneten Greifpunkt, mit Hilfe des Computerprogramms und Übermittlung des Annäherungspfads an den Roboter, in einem nach einem berechneten Bewegungsablauf;
E) Bewegung des Klemmgreifers nach dem berechneten Bewegungsablauf zu dem Greifpunkt, Greifen der Primärverpackung am Greifpunkt und Bewegung des Klemmgreifers,
   - wobei der die Primärverpackung geöffnet wird, indem der Klemmgreifer in einer Bewegung oder eine Drehbewegung unter Berücksichtigung von Messungen aus dem Kraft-Momentan-Sensor an seinem Tool Center Point entdrehend bzw. herausdrehend nach oben hochgezogen wird, bis eine vordefinierte Obergrenze für die Spannung gemessen durch den KMS-Sensor erreicht wird und/oder vordefinierte Kriterien für das Öffnen der Primärverpackung erreicht werden,
      alternativ
   - wobei die Primärverpackung geschlossen wird, indem der Klemmgreifer einer Bewegung oder eine Drehbewegung unter Berücksichtigung von Messungen aus dem Kraft-Momentan-Sensor (KMS-Sensor) an seinem Tool Center Point verdrehend und optional nach unten bewegt wird, bis eine vordefinierte Obergrenze für die Spannung gemessen durch den KMS-Sensor erreicht wird und / oder vordefinierte Kriterien für das Schließen der Primärverpackung erreicht werden;
F) Öffnen des Greifers und optionales Zurückfahren des Klemmgreifers zu einer Startposition;
   - Falls die die vordefinierten Kriterien für das Öffnen der Primärverpackung alternativ die vordefinierten Kriterien für das Schließen der Primärverpackung nicht erreicht sind, Wiederholung der Schritte A) bis F), bis diese erreicht werden.

Eine besondere Ausführungsform ist ein Verfahren zum automatisierten Manipulieren einer biegeschlaffe Primärverpackung (wie z. B. eine Tüte) in einer geöffneten formstabilen Sekundärverpackung, zusammen Gebinde genannt, durch einen computer-gesteuerten Roboter mit zwei Armen, mit jeweils an einem Tool Center Point fixierten Klemmgreifer überwacht mit einem Kraft-Momenten-Sensor, wobei in einem ersten Schritt aus den Bildaufnahmen von mindestens zwei Stereokameras eine 3-dimensionale Punktewolke (3D-Punktewolke), mindestens des oberen Segments der Primärverpackung, bereitgestellt wird und einen höchsten Punkt der Primärverpackung aus der 3D-Punktewolke, als Greifpunkt für einen der Klemmgreifer des Roboters mit Hilfe eines Computerprogramms ermittelt wird. In einem weiteren Schritt wird eine Bewegung für den Klemmgreifer zu dem berechneten Greifpunkt mit Hilfe des Computerprogramms berechnet und dem Roboter übermittelt. Der Klemmgreifer bewegt sich nach der berechneten Bewegung zu dem Greifpunkt, greift die Primärverpackung am Greifpunkt, zieht unter Berücksichtigung von Informationen (Messungen) aus dem Kraft-Momentan-Sensor am Tool Center Point des bewegten Klemmgreifers die Primärverpackung in einer Bewegung oder in einer Drehbewegung entdrehend bzw. herausdrehend nach oben hoch.

Bewegt sich der Klemmgreifer in einer Bewegung oder einer Drehbewegung nach oben, öffnet er die Primärverpackung bevorzugt dabei so, dass er die Primärverpackung zur Seite zieht und öffnet, damit Material mit Werkzeugen aus der Primärverpackung entnommen bzw. in die Primärverpackung eingeführt werden kann.

Solche weiteren Schritte und / oder auch Schritte zur Entnahme oder Auffüllen von Material in die geöffnete Primärverpackung mit einem passenden Werkzeug, können in das Steuerungsmodul konfiguriert werden.

In weiteren Schritten kann Material aus der Primärverpackung entladen- bzw. beladen werden.

In einem anderen berechneten Bewegungsablauf kann sich der Klemmgreifer in einer Drehbewegung nach unten bewegen und die Primärverpackung dabei so schließen, dass sie verdreht, schneckenförmig nach unten in einer Schließbewegung gedrückt ist. Das Ende der Schließbewegung kann durch eine Erhöhung der Messwerte durch den KMS-Sensor erkannt werden, insbesondere durch das Erreichen einer vordefinierten Obergrenze für die Messungen aus dem KMS-Sensor.

In einer Ausführungsform umfasst das erfindungsgemäße Verfahren nach der Bildaufnahme, mindestens des oberen Segments der Primärverpackung durch die mindestens zwei Stereokameras im Bildaufnahmemodul und Weitergabe dessen an den einen oder mehreren Prozessoren, folgende Subschritte:
a.i. Bereitstellen einer 3D-Punktewolke mindestens des oberen Segments der Primärverpackung oder des Gebindes aus einer Bildaufnahme des Gebindes;
a.ii. Bevorzugt, Entfernen von Rauschen und / oder Reduktion der Punkteanzahl zur einfacheren Verarbeitung der Daten. Eine solche Reduktion erfolgt typischerweise durch das automatische Entfernen sehr nah beieinanderliegender Punkte. Die Reduktion der Punkteanzahl verringert den erforderlichen Rechenaufwand des Bildverarbeitungssystems. In einem Beispiel wird zur Reduktion der Punktezahl diese dadurch bis zu einem Zielwert wie etwa 50 % reduziert, indem die am nächsten zueinander liegenden Punkten eliminiert werden. Dieser Prozess wird durchgeführt bis nur noch die Anzahl der gewünschten Punkte von der Startpunktzahl erreicht ist. Eine solche Reduktion wird z. B. von Part et al. beschrieben (http://www.cs.cmu.edu/~hyunsoop/cvpr13.pdf).
a.iii. Zuordnung von Punkten zu den bekannten Geometrien bzw. Elementen, mindestens zu der Primärverpackung, optional zu der Sekundärverpackung, zu dem Klemmgreifer, zu dem Roboterarm und/oder zu der sichtbaren Fläche eines Materials in der Primärverpackung Dadurch können auch deren Position und Größe ermittelt werden.

Für diese Zuordnung werden typischerweise die Position benachbarter Punkte der 3D-Punktewolke miteinander verglichen und einer jeweiligen Geometrie, auch geclusterter Bereiche genannt, zugeordnet. Hierzu gehören z. B. die aus der Punktewolke abgeleitete Sekundärverpackung auf Basis des Kriteriums "zylindrisch geometrischer Körper" oder eigens definierte Störkonturen bewegter (z. B. Kabelführung am Klemmgreifers) oder stationärer (z. B. Kameras, Lichtleistenquadrat) Konturen.

Alle Punkte, die zum Roboter und den Klemmgreifers gehören, können basierend auf der bekannten Position des Roboters herausgerechnet werden.

In einem Beispiel können die Punkte, die sich innerhalb einer zur Primärverpackung zugeordneten Fläche und die Punkte, die sich auf einer flachen Ebene befinden, als sichtbaren Fläche des Materials zugeordnet werden. Aus diesen Punkten kann eine Materialfläche berechnet werden.
a.iv. Selektion der Punkte der 3D-Punktewolke, die zur primären Verpackung zugeordnet ist, gegebenenfalls mittels Abzugs der Punkte, die zur Sekundärverpackung oder zum Klemmgreifer gehören.
a.v. Ermitteln eines höchsten Punktes der Primärverpackung aus der 3-dimensionalen - Punktewolke, als Greifpunkt für einen der Klemmgreifer.

In einer Ausführungsform umfasst das Verfahren folgende Subschritte zur Berechnung der Bewegung eines Klemmgreifers.
b.i. Berechnung eines kollisionsfreien Annäherungspfads für einen der Klemmgreifer. Bevorzugt nähert sich der Klemmgreifer von oben. In einem Beispiel wird für diese Berechnung, die Definition geclusterter Bereiche aus a.iii, berücksichtigt.
b.ii. Annähern des Klemmgreifers gemäß den Annäherungspfad aus b.i.

Hinsichtlich der Bewegung des Roboterarmes kann es vorgesehen sein, dass der Roboterarm und der Klemmgreifer sich zu Beginn des erfindungsgemäßen Verfahrens in einer definierten Ausgangsposition, auch erste Position genannt, befindet. Bevorzugt ist diese erste Position vorab definiert. Ebenfalls kann die definierte erste Position beim Einmessen des erfindungsgemäßen Systems, bzw. des Roboterarms, bestimmtwerden. Lässt der Klemmgreifer die Primärverpackung los, kann der Roboterarm zu der definierten ersten Position zurückkehren.

In einer Ausführungsform berechnet der Roboter sein Annäherungspfad selb ständig über eine dynamische Bahnplanung. Methoden zur Berechnung einer dynamischen Bahnplanung sind aus dem Stand der Technik bekannt. Z.B. wurden für die Bahnplanung die Software-Lösungen aus der ROS-Bibliothek für Manipulatoren (ros.org) verwendet.

In einem Beispiel wird für die Bahnplanung vorgegeben, dass der Klemmgreifer von oben senkrecht die Primärverpackung greift und sich kollisionsfrei annähert.

In einer Ausführungsform umfasst das Hochziehen und Entdrehen bzw. Herausdrehen der primären Verpackung folgende Schritte:
c.i. Greifen von oben am in a.v. ermittelten höchsten Punkt der Primärverpackung und hochziehen bis eine vordefinierte Obergrenze für die Spannung gemessen durch den KMS-Sensor erreicht wird, währenddessen die auf den Greifer übertragene Verdrehung der Primärverpackung mit Hilfe des KMS-Sensors gemessen wird und der Greifer, insbesondere das Handgelenk des Roboterarms, entgegen der gemessenen Verdrehung gedreht wird, bis bzw. so dass der KMS-Sensor keine Spannung um die vertikale Achse (Längsachse) mehr detektiert ;
c.ii. Loslassen der Primärverpackung durch Öffnen des Klemmgreifers. Bevorzugt wird der erste Roboterarm zur Seite in die Initialpose gefahren.

Die Subschritte a.i bis a.v sowie b.i bis b.ii. werden üblicherweise wiederholt, bis die Primärverpackung hochgezogen und entdreht, bzw. herausgedreht ist.

In einer Ausführungsform umfasst das Öffnen der Primärverpackung folgende Schritte:
d.i. Wiederholung der Schritte a.i. bis a.iv zur Bereitstellung einer aktuellen 3D-Punktewolke;
d.ii. Selektion einer Region von benachbarten Punkten der 3D-Punktewolke, die zur Kante der Primärverpackung zugeordnet sind, wobei dies über die Betrachtung der Höhe der jeweiligen Region und der Ausrichtung eines Normalenvektors auf den Punkten der Regionen erfolgt. Wenn der Normalenvektor horizontal ausgerichtet ist, kann daraus abgeleitet werden, dass die Fläche senkrecht steht. In einem Bespiel wird Schritt d.ii. wiederholt, bis eine Region gefunden wird, dessen Normalenvektor nicht horizontal ist, d. h. noch geöffnet werden muss. Mit anderen Worten wird für das nächste Greifen eine Region ausgewählt, bei der der Normalenvektor nicht horizontal ist.
d.iii. Greifen der selektierten Region mit dem ersten Klemmgreifer und Messung einer Spannung durch die KMS-Sensoren;
d.iv. Bewegung des Klemmgreifers unter Berücksichtigung der Messungen durch die KMS-Sensoren, soweit nach oben außen, bis der Klemmgreifer direkt oberhalb des Randes der Sekundärverpackung ist und / oder eine vordefinierte Obergrenze für die Spannung der Primärverpackung gemessen durch die KMS-Sensoren erreicht wird.

In einem Beispiel ist die vordefinierte Obergrenze für die Spannung abhängig von den Reißeigenschaften der Primärverpackung. Typischerweise wird die vordefinierte Obergrenze für die Spannung experimentell ermittelt. Außerdem kann durch Anwendung einer drehbaren Platzierung des Gebindes eine Überspannung der Primärverpackung verhindert werden. Nehmen die Messwerte der Kräfte durch die KMS-Sensoren plötzlich ab, hat sich die Trommel gedreht oder die Primärverpackung ist gerissen.

d.v. Schritte b.i. bis b.iv. wiederholen, vorzugsweise im Wechsel mit dem anderen Arm, bis die erste Kamera ein Bild bereitstellt in dem erkennbar ist, dass die Primärverpackung ausreichend geöffnet ist, um mit Werkzeugen Material aus der Verpackung entnehmen bzw. in die Verpackung einführen zu können. In einem Beispiel werden die Schritte b.i. bis b.iv. wiederholt, bis erkannt wird, dass die dem Material zugeordneten Punkte eine ausreichende sichtbare Fläche bilden.

Die beiden durch die Roboterarme geführten Klemmgreifer greifen - sofern möglich - abwechselnd einen Greifpunkt, manipulieren diesen und fixieren die Primärverpackung bis zur nach der nachfolgenden Manipulation durch den anderen Arm. Hierdurch kann ein zusammenfallen einer nicht fixierten Primärverpackung verhindert werden.

In einer Ausführungsform sind weitere Verfahrensschritte von der Position des in a.v ermittelten höchsten Punktes der Primärverpackung abhängig.

In einer Ausführungsform werden in einer Alternative zum Schritt a.v. die Verteilung des höchsten Punktes der Primärverpackung, mit Bezug auf den Rand der Sekundärverpackung ermittelt. Aus der Verteilung, kann ermittelt werden, ob die Primärverpackung erst über die Sekundärverpackung zentriert, d. h. weitgehend entdreht, und hochgezogen werden muss, oder ob direkt mit dem Öffnen der Primärverpackung begonnen werden kann. Je weiter dieser höchste Punkt in der Mitte des Gebindes liegt, oder je weiter der höchste Punkt der Primärverpackung mit Bezug auf den Rand der Sekundärverpackung oberhalb einer vordefinierten Entfernungsgrenze zum Rand der Sekundärverpackung liegt, desto umfangreicher ist die Manipulation der Primärverpackung, um eine geöffnete Primärverpackung zu erlangen, d. h. desto größer ist der Bedarf an die Schritte c.i bis c.iii (Entdrehen/Herausdrehen und Hochziehen).

In einer Ausführungsform ist der Rand der Sekundärverpackung (der Trommelrand), mit minimaler Verdrehung der Primärpackung als ein Zieh-Ziel definiert.

In einer Ausführungsform erfolgt in einem letzten Schritt das Stabilisieren der Primärverpackung in der zuvor erreichten Position durch eine externe Haltevorrichtung oder die Kante der Primärverpackung wird über den Rand der Sekundärverpackung nach unten gezogen.

In einer Ausführungsform sind diese sichtbaren Flächen und /oder die Größe der nötigen Öffnung, abhängig vom Werkzeug, vordefiniert. In einem Beispiel kann der Nutzer über eine Nutzeroberfläche das gewünschte Werkzeug auswählen oder dieses ist in einem Protokoll zur Entnahme oder Zufuhr von Material in die Primärverpackung, durch den oder einen weiteren Roboter, festgelegt.

Das Verfahren kann abgeschlossen werden, wenn aus der Sicht von oben das Material sichtbar ist und eine ausreichend große Öffnung aufweist, um mit Werkzeugen, wie z. B. Sauglanzen oder anderen Beprobungs-Werkzeugen Material entnehmen zu können.

Typischerweise wird in weiteren Schritten das Material durch das Robotermodul oder durch einen anderes Robotermodul aus der Primärverpackung entnommen oder in die Primärverpackung eingeführt.

Abschließend kann die Primärverpackung durch das Robotermodul geschlossen werden. Z. B. kann das automatisierte Schließen der biegeschlaffen Primärverpackung in der geöffneten formstabilen Sekundärverpackung durch den Roboter erreicht werden, dadurch dass:
- in einem ersten Subschritt die Primärverpackung gedreht wird,
- in einem zweiten Subschritt die Primärverpackung nach unten gedrückt wird, so dass die Primärverpackung geschlossen ist.

In einem anderen Beispiel führt die Bewegung des Klemmgreifers zum Verdrehen der Primärverpackung und es können optional Schritte zum Verschluss der Primärverpackung mittels eines Binders oder einer Klammer durchgeführt werden.

In einer Ausführungsform umfasst das Verdrehen der primären Verpackung folgende Schritte:
- Durchführung der Schritte a.i. bis a.iv. wie oben beschrieben.
   a.v. Ermittelten des höchsten Punktes der Primärverpackung,
   a.vi. Berechnung eines kollisionsfreien Annäherungspfad für einen der Klemmgreifer. Bevorzugt nähert sich der Klemmgreifer von oben. Für diese Berechnung wird die Definition geclusterter Bereiche aus a.iii verwendet.
   a.vi. Annähern des Klemmgreifers über den Annäherungspfad aus a.vi., greifen am in a.v. ermittelten höchsten Punkt der Primärverpackung und drehen, währenddessen die Spannung am Klemmgreifer mit Hilfe des KMS-Sensors gemessen wird, und der Klemmgreifer, durch das Handgelenk des Roboterarms, in die Richtung der gemessenen Verdrehung gedreht wird, bis eine vordefinierte Obergrenze für die Spannung der Primärverpackung, gemessen durch den KMS-Sensor, erreicht wird oder bis erkannt wird, dass die dem Material zugeordneten Punkten eine Fläche mit einer ermittelten Größe Null oder nahe Null bilden.
   a.vii. Loslassen der Primärverpackung durch Öffnen des Greifers.

In einer Ausführungsform umfasst das Verfahren nach dem Drehen Schritte zum Verschluss der Primärverpackung mittels eines Binders oder einer Klammer, bevor die Primärverpackung nach unten gedrückt wird.

In einer Ausführungsform wird in a.vi. gedreht und gleichzeitig nach unten gedrückt. Hiermit kann die Primärverpackung schneckenförmig in die Sekundärverpackung eingelegt werden.

In einer Ausführungsform ermöglicht das kraftgeregelte Robotermodul die Implementierung zahlreicher Sicherheitsfunktionen, welche die Verwendung des erfindungsgemäßen Systems ohne mechanische Schutzvorrichtungen ermöglicht. Beispielsweise stoppt der Manipulator seine Bewegung, wenn er eine Kraft größer als einen vordefinierten Wert ermittelt. Somit kann eine Gefährdung eines Nutzers oder Gegenstandes, durch Kollision mit dem Robotermodul, vermieden werden. Vorzugsweise umfasst das kraftgeregelte Robotermodul ebenfalls eine Geschwindigkeitsüberwachung, welche sicherstellt, dass der Roboterarm eine zulässige vordefinierte Maximalgeschwindigkeit nicht überschreitet.

Die erfindungsgemäße Lösung ist für das Manipulieren von Schüttgutmaterial, insbesondere Gefahrstoffe oder für das sterile Manipulieren des Materials, insbesondere in der Pharma-Industrie, vorteilhaft.

Einige Ausführungsformen des erfindungsgemäßen Verfahrens und der erfindungsgemäßen Vorrichtung werden nachfolgend anhand der beigefügten Zeichnungen näher beschrieben und erläutert. Variationen dieser Beispiele können für den Durchschnittsfachmann offensichtlich werden, solche Variationen gegebenenfalls anzuwenden und die Erfinder beabsichtigen, dass die Variationen anders als hierin spezifisch beschrieben, praktiziert werden. Dementsprechend umfasst diese Erfindung alle Modifikationen und Äquivalente des Gegenstands, die in den Schutzbereich der beigefügten Ansprüche fallen.

Die Verwendung der Begriffe "ein" und "einen" und "der" und ähnlicher Verweise im Zusammenhang mit der Beschreibung der Erfindung (insbesondere im Zusammenhang mit den folgenden Ansprüchen) ist so auszulegen, dass sie sowohl den Singular als auch den Plural abdecken, sofern nicht anders hier angegeben oder durch den Kontext eindeutig widersprochen. Die Begriffe "umfassend", "einschließlich", "mit" und "enthaltend" sind als offene Begriffe zu verstehen (d. h. "einschließlich, aber nicht beschränkt auf"), sofern nicht anders angegeben.

### Zeichnungen:

- Fig 1: schematische Darstellungen der Vorrichtung zur Ausführung des Verfahrens gemäß einem bevorzugten Ausführungsbeispiel der Erfindung
- Fig 2: zeigt ein Flussdiagramm des erfindungsgemäßen Verfahrens mit den Schritten für das Öffnen der Primärverpackung mit dem Steuerungskriterium Untergrenze für die Größe der sichtbaren Fläche
- Fig 3: zeigt ein Flussdiagramm des erfindungsgemäßen Verfahrens mit den Schritten für das Öffnen der Primärverpackung mit dem Steuerungskriterium "Ist der Klemmgreifer direkt oberhalb des Randes der Sekundärverpackung?"
- Fig. 4: zeigt ein Bild des Systems indem die 3D-Punktewolke mit Hilfe eines Out-of-Core Algorithmus visualisiert wird und über die Primärverpackung angezeigt wird.
- Fig. 5: zeigt die 3D-Scanansicht der Vorrichtung.

Figur 1 zeigt exemplarisch eine schematische Darstellung des erfindungsgemäßen Systems und seiner Teilkomponenten von der Seite mit folgender Definition der Bezugszeichen:
1. Zweiarmigen Roboter
2. Klemmgreifer
3. Klemmgreifer
4. Kraft-Momenten-Sensor (KMS)
5. Primarverpackung
6. Sekundärverpackung
7. Stereo-Kamerasysteme
8. Aufnahme Sekundärverpackung (drehbar)
9. Beleuchtung
10. Greifpunkt des Klemmgreifers
   30 Der Sekundärverpackung zugeordnete Pixel
   21 Punktewolke der Primärverpackung
   22 Berechnete höchste Punkte der Primärverpackung

Zum Beispiel wurde im kraftgeregelten Robotermodul ein Leichtbauroboter LBR iiwa der Firma KUKA AG verwendet.

Zur Aufnahme einer 3D-Punktewolke des Aufnahmebereichs wurden mindestens zwei Stereokameras verwendet. Jeder Punkt der Wolke wird dabei zeitlich und räumlich (XYZ-Koordinaten) lokalisiert und kann in weiterer Folge auch georeferenziert werden.

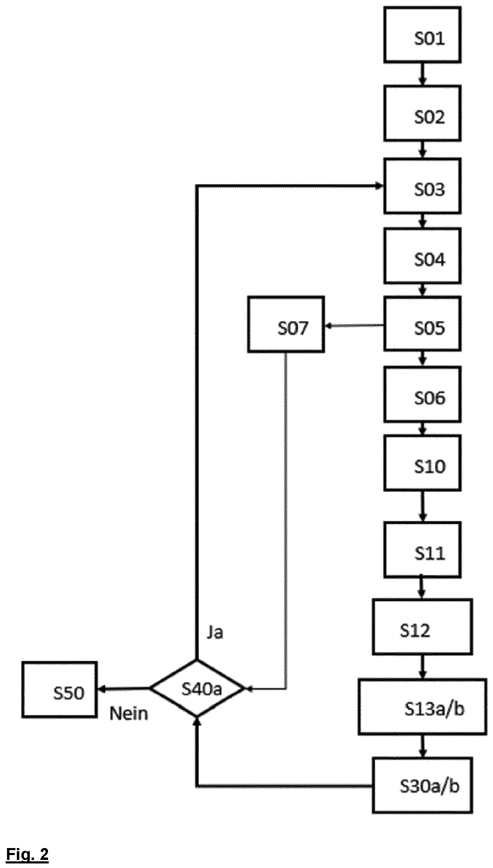

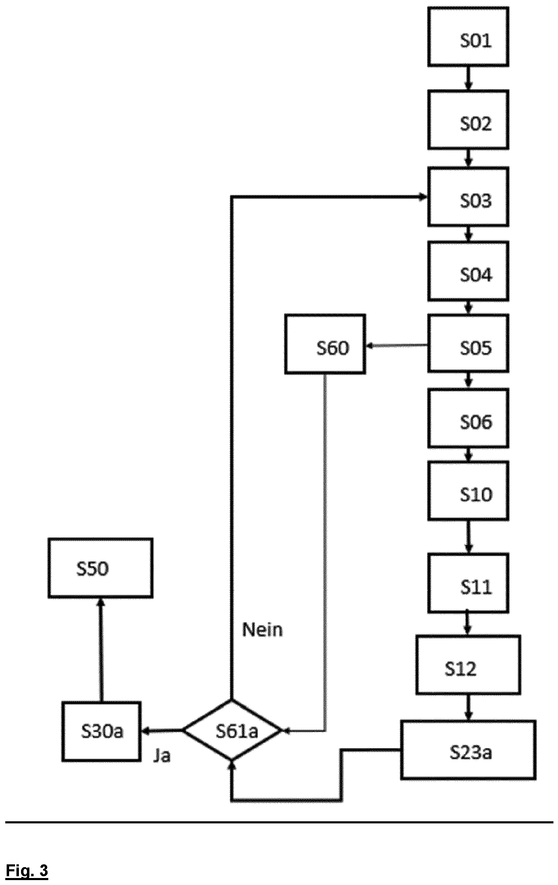

Figur 2 und 3 zeigen ein Flussdiagramm mit den Schritten der erfindungsgemäßen Verfahren. Im Folgenden werden die Schritte der Verfahren unter Bezugnahme auf die Flussdiagramme erläutert.
S0 1 Positionieren der Gebinde mit geöffneter Sekundärverpackungim Aufnahmebereich sowie Festlegen der Steuerungskriterien, wie die Obergrenze für die Spannung der Primärverpackung (Obergrenze für das KMS-Sensor) und z B. der Untergrenze für die Größe der sichtbarenFläche S02 Roboter in Initialposition
S03 Aufnahme einer 3D-Punktewolke durch die mindestens zwei Stereokameras
S04 Entfernen von Rauschen und einer Reduktion der Punkteanzahl zur einfacheren Verarbeitung der Daten
S05 Zuordnung von Punkten zu den bekannten Geometrien - Primärverpackung Sekundarverpackung, Klemmgreifer und Roboter zur Oberflächenrekonstruktion mit Hilfe eines Computerprogramms zur Verarbeitung n-dimensionaler Punktwolken und dreidimensionaler Geometrie.
S06 Selektion der Punkte der 3D-Punktewolke, die zur primären Verpackung zugeordnet sind
S07 Selektion der Punkte der 3D-Punktewolke, die zum Material zugeordnet sind, Berechnung der sichtbaren Materialfläche.
S10 Ermittelten des höchsten Punktes der Primärverpackung mit Hilfe eines Algorithmus.
S11 Berechnen eines kollisionsfreien Annäherungspfads für den Klemmgreifer von der aktuellen Position zum höchsten Punkt der Primärverpackung mit Hilfe eines Algorithmus. S12 Greifen mit einem Klemmgreifer am höchsten Punkt der Primärverpackung.
S13a - Primärverpackung öffnen durch Hochziehen mit dem Klemmgreifer der Primärverpackung unter kontinuierlichen Messungen der Verdrehung und der Spannung gemessen durch den KMS-Sensor, und Drehung des Tool Center Point des Roboterarms entgegen der gemessenen Verdrehung bis der KMS-Sensor keine Verdrehung um die Längsachse mehr detektiert und bis die Obergrenze für die Spannung gemessen durch den KMS-Sensor erreicht wird.
S13b - Primärverpackung Schließen durch Drehung des Tool Center Point des Roboterarms bis der KMS-Sensor eine Obergrenze für die Verdrehung um die Längsachse erreicht und bis die Obergrenze für die Spannunggemessen durch den KMS-Sensor erreicht wird und optional nach unten drückend der Primärverpackung bis eine Obergrenze für einen Widerstand durch den KMS-Sensor erreicht wird.
S23a - Primärverpackung öffnen durch Hochziehen mit dem Klemmgreifer der Primärverpackungunter kontinuierlichenMessungen der Spannung gemessen durch denKMS-Sensor und Drehung des Tool Center Point des Roboterarms entgegen der gemessenen Verdrehung eine vordefinierte Obergrenze für die Messung durch den KMS-Sensor erreicht wird.
S30a/b Loslassen der Primärverpackung durch Öffnen des Klemmgreifers.
S40aDie sichtbare Fläche ≤ Untergrenze der sichtbaren Fläche aus S01.
   Wiederholung von S02 bis S30a mit dem anderen Arm bis die sichtbare Fläche ≤ Untergrenze der sichtbaren Fläche aus S01 verneint wird.
S50 Stabilisieren der Primärverpackung in der offenen Position.
S60 Definition des Randes der Sekundärverpackung.
S61a - Ist der Klemmgreifer oder der höchste Punkt der Primärverpackung direkt oberhalb des Randes der Sekundärverpackung oder liegt der Klemmgreifer oder der höchste Punkt der Primärverpackung einer Entfernung größer oder gleich einer vordefinierten Entfernungsgrenze zum Rand der Sekundärverpackung?

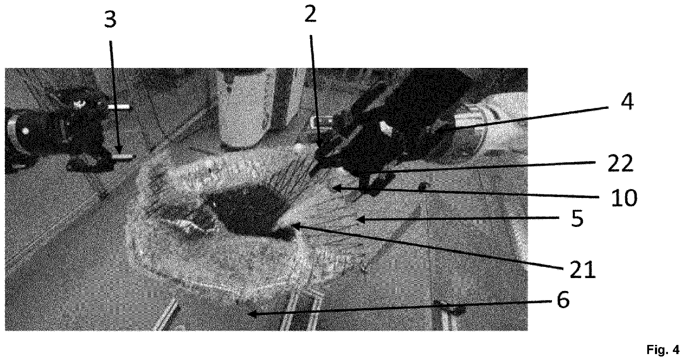

Figur 4 zeigt ein Bild des Systems, indem zur Veranschaulichung die 3D-Punktewolke über die Primärverpackung angezeigt wird. Der Greifpunkt (10) des Klemmgreifers (3) nähert sich einem der berechneten höchsten Punkte der Primärverpackung (22).

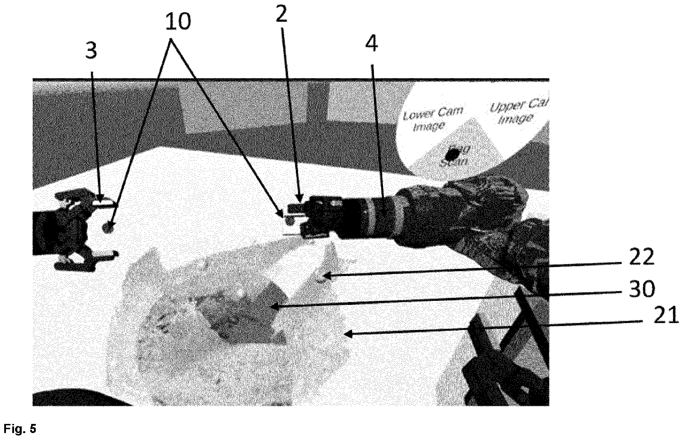

Figur 5 zeigt eine 3D-Scanansicht der Vorrichtung, insbesondere die der Sekundärverpackung zugeordneten Pixel (30), die Punktewolke der Primärverpackung (21) und die berechneten höchsten Punkte der Primärverpackung (22). Der Klemmgreifer (3) nähert sich einem der höchsten Punkte von oben an.

## Patentansprüche

1. System zum automatisierten Manipulieren einer biegeschlaffen Primärverpackung in einer geöffneten formstabilen Sekundärverpackung, zusammen Gebinde genannt, mit folgenden Systemkomponenten:
- Eine biegeschlaffe Primärverpackung mit einem verschlossenen und verdrehten oberen Segment in einer geöffneten formstabilen Sekundärverpackung;
- Ein Robotermodul, umfassend einen zweiarmigen Roboter, mit jeweils einem Klemmgreifer an einem Tool Center Point des Roboterarms montiert, wobei jeder Tool Center Point einen Kraft-Momenten-Sensor umfasst, der mindestens Messungen zur Kraft-und-Momentrichtung in Freiheitsgraden bereitstellen kann;
- Ein Bildaufnahmemodul zur Bildaufnahme mindestens des oberen Segments der Primärverpackung, umfassend mindestens zwei Stereokameras zur 3D-Bildaufnahme, wobei mindestens eine der Stereokameras seitlich zu einer Luftlinie zwischen dem Gebinde und dem Roboter platziert ist;
- Ein oder mehrere Prozessoren zur Steuerung der Systemmodule, konfiguriert für die Durchführung folgender Schritte:
- Bildaufnahme durch das Bildaufnahmemodul;
- Bildbearbeitung und Bereitstellen einer 3-dimensionalen-Punktwolke aus den empfangenen Bildern;
- Oberflächenrekonstruktion mindestens der Primärverpackung aus der 3-dimensionalen-Punktwolke;
- Berechnen eines höchsten Punktes der Primärverpackung aus der Oberflächenrekonstruktion der Primärverpackung als Greifpunkt für einen der Klemmgreifer sowie
- Berechnen eines Bewegungsablaufs für einen der Roboterarme, umfassend einen kollisionsfreien Annäherungspfad für den Klemmgreifer zu dem berechneten Greifpunkt,
- Weitergeben des berechneten Bewegungsablaufs an das Robotermodul;
- Empfang der Messungen aus den Kraft-Momenten-Sensoren;
- Steuerung des Greifens der Primärverpackung am Greifpunkt und der Bewegung des Greifers, wobei die Primärverpackung geöffnet wird, indem der Greifer in einer Bewegung oder einer Drehbewegung unter Berücksichtigung von
Messungen aus dem Kraft-Momentan-Sensor an seinem Tool Center Point herausdrehend nach oben hochgezogen wird, bis die Spannung der Primärverpackung gemessen durch den Kraft-Momentan-Sensor eine vordefinierte Obergrenze erreicht und/oder bis eine der Kameras ein Bild bereitstellt, in dem erkennbar ist, dass die Primärverpackung
ausreichend geöffnet ist; das System weiter Schnittstellen zwischen dem Robotermodul und den Prozessoren und zwischen dem Bildaufnahmemodul und den Prozessoren umfassend.

2. System nach Anspruch 1, wobei die zweite Kamera das Gebinde von oben aufnehmen kann.

3. System nach Anspruch 1, wobei der Roboter fixiert ist.

4. System nach einem der Ansprüche 1 bis 3, umfassend ein Modul zur Platzierung der Gebinde in Reichweite der Roboterarme und im Aufnahmebereich der Stereokameras, wobei das Gebinde im Modul zur Platzierung der Gebinde drehbar gelagert ist.

5. System nach einem der Ansprüche 1 bis 4, wobei die Kraft-Momenten-Sensoren dazu ausgebildet sind, die auftretenden Drehmomente permanentin 6 Dimensionen, 3 translatorische und 3 rotatorische Dimensionen detektieren zu können

6. Verfahren zum automatisierten Manipulieren einer biegeschlaffen Primärverpackung in einer geöffneten formstabilen Sekundärverpackung, zusammen Gebinde genannt, durch einen computer-gesteuerten zweiarmigen Roboter, mit jeweils einem an einem Tool Center Point des Roboterarms fixierten Klemmgreifer, der durch einen an jedem Tool-Center-Point vorhandenen, mindestens Messungen zur Kraft-und- Momentrichtung in Freiheitsgraden bereitstellenden Kraft-Momenten-Sensor überwacht wird, mit folgenden Schritten
A) Bildaufnahme mindestens des verschlossenen und verdrehten oberen Segments der biegeschlaffen Primärverpackung mit mindestens zwei Stereokameras zur 3D-Bildaufnahme, wobei mindestens eine der Stereokameras seitlich zu einer Luftlinie zwischen dem Gebinde und dem Roboter platziert ist;
B) Bereitstellung einer 3-dimensionalen Punktewolke, mindestens des oberen Segments der Primärverpackung durch Bildanalyse der Bildaufnahme;
C) Ermitteln eines höchsten Punktes der Primärverpackung aus der 3-dimensionalen - Punktewolke, als Greifpunkt für einen der Greifer mit Hilfe eines Computerprogramms zur Oberflächenrekonstruktion mindestens der Primärverpackung aus der 3-dimensionalen-Punktwolke;
D) Berechnung, für einen der Roboterarme, eines Bewegungsablaufs umfassend einen kollisionsfreien Annäherungspfad zu dem berechneten Greifpunkt mitHilfe des Computerprogramms und Übermittlung des Annäherungspfads an den Roboter in einem nach einem berechneten Bewegungsablauf;
E) Bewegung des Greifers nach dem berechneten Bewegungsablauf zu dem Greifpunkt, Greifen der Primärverpackung am Greifpunkt, und Bewegung des Greifers,
- wobei die Primärverpackung geöffnet wird, indem der Greifer in einer Bewegung oder eine Drehbewegung unter Berücksichtigung von Messungen aus dem Kraft-Momentan-Sensor an seinem Tool Center Point herausdrehend nach oben hochgezogen wird, bis eine vordefinierte Obergrenze für die Spannung der Primärverpackung, gemessen durch den Kraft-Momentan-Sensor erreicht wird und/oder vordefinierte Kriterien für das Öffnen der Primärverpackung erreicht werden;
F) Öffnen des Greifers und optional Zurückfahren des Greifers zu einer Startposition;
- Wiederholung der Schritte A) bis F), bis eine der Kameras ein Bild bereitstellt in dem erkennbar ist, dass die Primärverpackung ausreichend geöffnet ist.

7. Verfahren nach Anspruch 6, wobei Punkte der 3-dimensionalen Punktewolke der Primärverpackung und der Sekundärverpackung und optional dem Klemmgreifer zugeordnet werden.

8. Verfahren nach Anspruch 7, wobei in einer Ausführung des Schritts D) aus den Punkten der 3-dimensionalen Punktewolke, die zu der Sekundärverpackung zugeordnet sind, ein Rand der Sekundärverpackung definiert wird und die Primärverpackung hochgezogen und herausgedreht ist, wenn der höchste Punkt der Primärverpackung mit einer Entfernung größer oder gleich einer vordefinierten Entfernungsgrenze zum Rand der Sekundärverpackung liegt.

9. Verfahren nach Anspruch 6, wobei in einer Ausführung des Schritts D) Punkte der 3-dimensionalen Punktewolke einer sichtbaren Fläche eines Materials in der Primärverpackung zugeordnet werden, die Position und Größe der sichtbaren Materialfläche ermittelt werden und die Primärverpackung hochgezogen und herausgedreht ist, wenn die Größe der sichtbaren Materialfläche ausreichend ist, um mit Hilfe eines vordefinierten Werkzeugs Material aus der Primärverpackung zu entnehmen bzw. in die Primärverpackung einzuführen.

10. Verfahren nach einem der oberen Ansprüche 6 bis 9, wobei im Schritt D) die Primärverpackung hochgezogen und herausgedreht wird, mit folgenden Subschritten:
- Mit dem Klemmgreifer, Greifen von oben am ermittelten höchsten Punkt der Primärverpackung hochziehen, bis eine vordefinierte Obergrenze, gemessen durch die Kraft-Momenten-Sensoren erreicht wird, währenddessen die Verdrehung der Primärverpackung übertragen auf den Greifer, mit Hilfe der Kraft-Momenten-Sensoren gemessen wird und der Greifer entgegen der gemessenen Verdrehung gedreht wird, so dass die Kraft-Momenten-Sensoren keine Verdrehung um die Längsachse detektieren.

## Claims

1. System for automatically manipulating flexible primary packaging in open dimensionally stable secondary packaging, together called a package, having the following system components:
- flexible primary packaging with a closed and twisted upper segment in open dimensionally stable secondary packaging;
- a robot module comprising a two-armed robot with a clamping gripper installed in each case at a tool centre point of the robot arm, wherein each tool centre point comprises a force-torque sensor which can provide at least measurements of the force and torque direction in degrees of freedom;
- an image recording module for recording images of at least the upper segment of the primary packaging, comprising at least two stereo cameras for recording 3D images, wherein at least one of the stereo cameras is placed to the side of an air line between the package and the robot;
- one or more processors for controlling the system modules, configured to carry out the following steps:
- recording images by means of the image recording module;
- processing images and providing a three-dimensional point cloud from the received images;
- reconstructing the surface of at least the primary packaging from the three-dimensional point cloud;
- calculating a highest point of the primary packaging from the surface reconstruction of the primary packaging as a gripping point for one of the clamping grippers, and
- calculating a movement sequence for one of the robot arms, comprising a collision-free approach path to the calculated gripping point for the clamping gripper;
- forwarding the calculated movement sequence to the robot module;
- receiving the measurements from the force-torque sensors;
- controlling the gripping of the primary packaging at the gripping point and the movement of the gripper, wherein the primary packaging is opened by virtue of the gripper being pulled upwards in an unscrewing manner in a movement or a rotational movement, taking into account measurements from the force-torque sensor at its tool centre point, until the stress of the primary packaging measured by the force-torque sensor reaches a predefined upper limit and/or until one of the cameras provides an image in which it can be seen that the primary packaging is sufficiently open;
the system also comprising interfaces between the robot module and the processors and between the image recording module and the processors.

2. System according to Claim 1, wherein the second camera can record the package from above.

3. System according to Claim 1, wherein the robot is fixed.

4. System according to one of Claims 1 to 3, comprising a module for placing the packages within reach of the robot arms and in the recording region of the stereo cameras, wherein the package is rotatably mounted in the module for placing the packages.

5. System according to one of Claims 1 to 4, wherein the force-torque sensors are designed to be able to permanently detect the torques which arise in 6 dimensions, 3 translational and 3 rotational dimensions.

6. Method for automatically manipulating flexible primary packaging in open dimensionally stable secondary packaging, together called a package, by means of a computer-controlled two-armed robot with in each case a clamping gripper fixed at a tool centre point of the robot arm and monitored by a force-torque sensor that is present at each tool centre point and provides at least measurements of the force and torque direction in degrees of freedom, having the following steps
A) recording images of at least the closed and twisted upper segment of the flexible primary packaging using at least two stereo cameras for recording 3D images, wherein at least one of the stereo cameras is placed to the side of an air line between the package and the robot;
B) providing a three-dimensional point cloud of at least the upper segment of the primary packaging by analysing the recorded images;
C) determining a highest point of the primary packaging from the three-dimensional point cloud as a gripping point for one of the grippers with the aid of a computer program for reconstructing the surface of at least the primary packaging from the three-dimensional point cloud;
D) calculating, for one of the robot arms, a movement sequence comprising a collision-free approach path to the calculated gripping point with the aid of the computer program and transmitting the approach path to the robot in a calculated movement sequence;
E) moving the gripper to the gripping point according to the calculated movement sequence, gripping the primary packaging at the gripping point, and moving the gripper,
- wherein the primary packaging is opened by virtue of the gripper being pulled upwards in an unscrewing manner in a movement or a rotational movement, taking into account measurements from the force-torque sensor at its tool centre point, until a predefined upper limit for the stress of the primary packaging, measured by the force-torque sensor, is reached and/or predefined criteria for opening the primary packaging are achieved;
F) opening the gripper and optionally returning the gripper to a starting position;
- repeating steps A) to F) until one of the cameras provides an image in which it can be seen that the primary packaging is sufficiently open.

7. Method according to Claim 6, wherein points in the three-dimensional point cloud are assigned to the primary packaging and to the secondary packaging and optionally to the clamping gripper.

8. Method according to Claim 7, wherein, when performing step D), an edge of the secondary packaging is defined from the points in the three-dimensional point cloud which are assigned to the secondary packaging, and the primary packaging is pulled up and unscrewed if the highest point of the primary packaging is at a distance of greater than or equal to a predefined distance limit from the edge of the secondary packaging.

9. Method according to Claim 6, wherein, when performing step D), points in the three-dimensional point cloud are assigned to a visible surface of a material in the primary packaging, the position and size of the visible material surface are determined, and the primary packaging is pulled up and unscrewed if the size of the visible material surface is sufficient to remove material from the primary packaging or to insert material into the primary packaging with the aid of a predefined tool.

10. Method according to one of the preceding Claims 6 to 9, wherein, in step D), the primary packaging is pulled up and unscrewed with the following substeps:
- using the clamping gripper to grip the primary packaging at the determined highest point of the latter from above, pulling the primary packaging up until a predefined upper limit, measured by the force-torque sensors, is reached, while the twisting of the primary packaging, transferred to the gripper, is measured with the aid of the force-torque sensors, and the gripper is rotated counter to the measured twisting, with the result that the force-torque sensors do not detect any twisting about the longitudinal axis.

## Revendications

1. Système de manipulation automatisée d'un emballage primaire souple en flexion dans un emballage secondaire indéformable ouvert, l'ensemble étant appelé unité d'emballage, comprenant les composants de système suivants :
- un emballage primaire souple en flexion avec un segment supérieur fermé et tordu dans un emballage secondaire indéformable ouvert ;
- un module de robot, comprenant un robot à deux bras, avec respectivement une griffe de serrage montée au niveau d'un point central d'outil du bras de robot, dans lequel chaque point central d'outil comprend un capteur force/couple qui peut fournir au moins des mesures concernant la direction de force et de couple dans des degrés de liberté ;
- un module de prise de vue pour la prise de vue au moins du segment supérieur de l'emballage primaire, comprenant au moins deux caméras stéréo pour une prise de vue 3D, dans lequel au moins l'une des caméras stéréo est placée latéralement par rapport à une ligne droite entre l'unité d'emballage et le robot ;
- un ou plusieurs processeurs pour commander les modules de système, configurés pour exécuter les étapes suivantes consistant à :
- réaliser une prise de vue à l'aide du module de prise de vue ;
- traiter l'image et fournir un nuage de points en 3 dimensions à partir des images reçues ;
- reconstruire la surface au moins de l'emballage primaire à partir du nuage de points en 3 dimensions ;
- calculer un point le plus haut de l'emballage primaire à partir de la reconstruction de surface de l'emballage primaire en tant que point de saisie pour l'une des griffes de serrage, et
- calculer une séquence de mouvement pour l'un des bras de robot, comprenant un chemin d'approche sans collision pour la griffe de serrage jusqu'au point de saisie calculé ;
- retransmettre la séquence de mouvement calculée au module de robot ;
- recevoir les mesures à partir des capteurs force/couple ;
- commander la saisie de l'emballage primaire au point de saisie et le mouvement du préhenseur, dans lequel l'emballage primaire est ouvert en ce que le préhenseur est soulevé vers le haut en le sortant par rotation dans un mouvement ou une rotation en tenant compte de mesures provenant du capteur force/couple au niveau de son point central d'outil jusqu'à ce que la tension de l'emballage primaire, mesurée par le capteur force/couple, atteigne une limite supérieure prédéfinie et/ou jusqu'à ce que l'une des caméras fournisse une image qui permet de percevoir que l'emballage primaire est suffisamment ouvert ;
le système comprenant en outre des interfaces entre le module de robot et les processeurs et entre le module de prise de vue et les processeurs.

2. Système selon la revendication 1, dans lequel la deuxième caméra peut enregistrer l'unité d'emballage par le haut.

3. Système selon la revendication 1, dans lequel le robot est fixé.

4. Système selon l'une quelconque des revendications 1 à 3, comprenant un module pour placer l'unité d'emballage à portée des bras de robot et dans la zone d'enregistrement des caméras stéréo, l'unité d'emballage étant montée en rotation dans le module pour le placement de l'unité d'emballage.

5. Système selon l'une quelconque des revendications 1 à 4, dans lequel les capteurs force/couple sont réalisés pour pouvoir détecter en permanence les couples apparaissant dans 6 dimensions, notamment 3 dimensions de translation et 3 dimensions de rotation.

6. Procédé permettant de manipuler un emballage primaire souple en flexion dans un emballage secondaire indéformable ouvert, l'ensemble étant appelé unité d'emballage, par un robot à deux bras commandé par ordinateur, comprenant respectivement une griffe de serrage fixée à un point central d'outil du bras de robot et qui est surveillée par un capteur force/couple présent au niveau de chaque point central d'outil, fournissant au moins des mesures concernant la direction de force/couple dans des degrés de liberté, comprenant les étapes suivantes consistant à
A) réaliser une prise de vue au moins du segment supérieur fermé et tordu de l'emballage primaire souple en flexion par au moins deux caméras stéréo pour une prise de vue 3D, dans lequel au moins l'une des caméras stéréo est placée latéralement par rapport à une ligne droite entre l'unité d'emballage et le robot ;
B) fournir un nuage de points en 3 dimensions, au moins du segment supérieur de l'emballage primaire par analyse d'image de la prise de vue ;
C) établir un point le plus haut de l'emballage primaire à partir du nuage de points en 3 dimensions comme point de saisie pour l'un des préhenseurs à l'aide d'un programme informatique pour la reconstruction de surface au moins de l'emballage primaire à partir du nuage de points en 3 dimensions ;
D) calculer, pour l'un des bras de robot, une séquence de mouvement comprenant un chemin d'approche sans collision jusqu'au point de préhension calculé à l'aide du programme informatique et transmettre le chemin d'approche au robot en une seule fois après une séquence de mouvement calculée ;
E) déplacer le préhenseur après la séquence de mouvement calculée jusqu'au point de saisie, saisir l'emballage primaire au point de saisie, et déplacer le préhenseur,
- dans lequel l'emballage primaire est ouvert en ce que le préhenseur est soulevé vers le haut en le sortant par rotation dans un mouvement ou une rotation en tenant compte de mesures provenant du capteur force/coupe au niveau de son point central d'outil jusqu'à ce qu'une limite supérieure prédéfinie pour la tension de l'emballage primaire, mesurée par le capteur force/couple, soit atteinte et/ou des critères prédéfinis pour l'ouverture de l'emballage soient atteints ;
F) ouvrir le préhenseur et en option ramener le préhenseur à une position de départ ;
- répéter les étapes A) à F) jusqu'à ce que l'une des caméras fournissent une image qui permet de percevoir que l'emballage primaire est suffisamment ouvert.

7. Procédé selon la revendication 6, dans lequel des points du nuage de points en 3 dimensions sont associés à l'emballage primaire et à l'emballage secondaire et en option à la griffe de serrage.

8. Procédé selon la revendication 7, dans lequel, dans une exécution de l'étape D), un bord de l'emballage secondaire est défini à partir des points du nuage de points en 3 dimensions qui sont associés à l'emballage secondaire, et l'emballage primaire est soulevé et sorti par rotation lorsque le point le plus haut de l'emballage primaire se trouve à une distance supérieure ou égale à une limite de distance prédéfinie par rapport au bord de l'emballage secondaire.

9. Procédé selon la revendication 6, dans lequel, dans une exécution de l'étape D), des points du nuage de points en 3 dimensions sont associés à une surface visible d'une matière dans l'emballage primaire, la position et la taille de la surface de matière visible sont établies, et l'emballage primaire est soulevé et sorti par rotation lorsque la taille de la surface de matière visible est suffisante pour retirer de la matière de l'emballage primaire à l'aide d'un outil prédéfini ou pour en introduire dans l'emballage primaire.

10. Procédé selon l'une quelconque des revendications précédentes 6 à 9, dans lequel à l'étape D), l'emballage primaire est soulevé et sorti par rotation, comprenant les sous-étapes suivantes :
- à l'aide de la griffe de serrage, soulever l'emballage primaire en le saisissant par le haut au point le plus haut établi jusqu'à ce qu'une limite supérieure prédéfinie, mesurée par les capteurs force/moment, soit atteinte pendant que la torsion de l'emballage primaire, transmise au préhenseur, est mesurée à l'aide des capteurs force/couple et le préhenseur est tourné contre la torsion mesurée de sorte que les capteurs de force/couple ne détectent aucune torsion autour de l'axe longitudinal.
